# DEMANDE DE BREVET EUROPEEN

(11) **EP 2 410 774 A2**
(43) Date de publication de la demande: **25.01.2012**
(21) Numéro de dépôt: 11185515.1
(22) Date de dépôt: 01.08.2002
(51) Int. Cl.: H04W 4/12, H04L 29/08

(54) **Systèm d'interoperabilité entre messages MMS et messages SMS/EMS et procédé d'échange associé**

(30) Priorité: 27.08.2001 FR 0111131
(62) Demande divisionnaire de: 02291946.8
(71) Demandeur: Imerj, Limited, Grand Cayman (KY)
(72) Inventeur: Le Bodic, Gwenael, 92800 Puteaux (FR); Ricoeur, Jean-Luc, 75014 Paris (FR)
(74) Mandataire: Tolfts, Pippa Helen

(57) **Abrégé**

Système de messagerie associé à un domaine de messagerie comprenant au moins un réseau de radiocommunication, un serveur de messagerie d'une première norme de messages courts et/ou avancés, dite EMS/SMS (Enhance Message Service/ Short Message Service) et/ou un serveur de messagerie d'une seconde norme de messages multimédia, dite MMS (Multimedia Message Service), caractérisé en ce que ledit domaine de messagerie comprend en outre une passerelle de messagerie comportant une base de données constituée d'une table des profiles de messagerie des terminaux appartenant au domaine de messagerie, ladite passerelle de messagerie étant apte à convertir un message émis dans une première norme (EMS, MMS) en message d'une seconde norme (EMS/MMS).

## Description

La présente invention concerne le domaine des messages reçus et/ou envoyés depuis et/ou vers des terminaux de radiocommunication, tels que des téléphones mobiles.

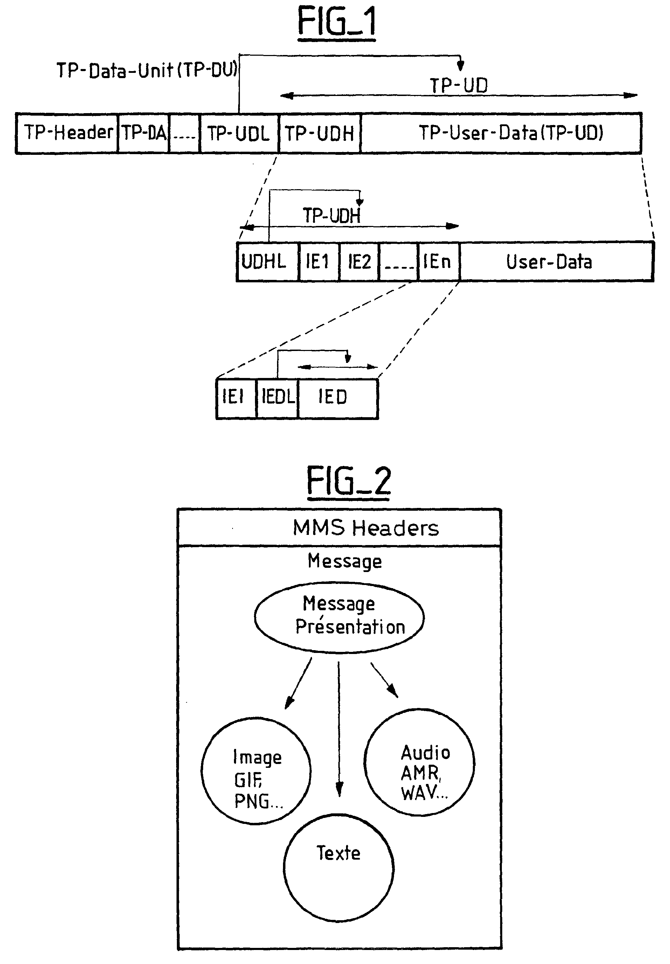

L'échange de messages courts, désignés par la suite comme SMS selon la terminologie anglaise de Short Message Service, a connu depuis quelques temps un essor considérable. Classiquement, un SMS est constitué d'un bloc unitaire de données (TPDU pour Transport Protocol Data Unit) dont une illustration schématique est donnée sur la figure 1. Ce bloc de données TPDU comporte un en-tête associé au protocole de transport utilisé (connu comme TP Header pour Transport Protocol Header en anglais) et des données d'utilisation (connues comme TP User Data). L'en-tête, TP Header, contient des informations de transmission telles que l'adresse de destination (TP-DA), qui peut être un numéro de téléphone ou une adresse électronique par exemple, l'identification du protocole de transport utilisé, qui peut être un transport par fichier, par hypertext, par radio ou autre, la longueur des données du message (TP-UDL), ainsi que d'autres informations relatives à l'acheminement du message, telles que l'heure, la présence d'un en-tête dans les données ou autres, certaines de ces informations étant obligatoires et d'autres facultatives. Les données du message SMS (TP User Data) comportent un en-tête connu sous le terme de User Data Header (TP-UDH) suivi du message lui-même, User Data (TP-UD).

Dans ses premiers développements, un message court ne comprenait que du texte sans aucunes données de type multimédia telles que des mélodies ou des images par exemple, et de fait ne contenait pas beaucoup d'information. Ainsi, un seul bloc de données (TPDU) pouvait transporter les informations à transmettre. Cependant, le développement de messages courts dits avancés, désignés par la suite comme EMS selon la terminologie anglaise de Enhanced Message Service, a récemment pris de l'ampleur et conduit à introduire une recommandation à ce sujet dans la norme SMS 3GPP TS 23.040. Un message avancé peut contenir beaucoup d'informations, ce qui oblige généralement à une concaténation des blocs de données (TPDU) pour transmettre les EMS à travers un réseau de radiocommunication.

Dans un message EMS, l'en-tête de données (TP-UDH) comprend une indication sur la longueur de l'en-tête (UDHL) et au moins un élément d'information (IE pour Information Element en anglais), suivi ensuite par les données du message (User Data). Or, les éléments d'information IE peuvent contenir des données 5 multimédia à associer au message avancé EMS. Chaque élément d'information IE contient un champ d'identification (IEI) suivi d'un champ indiquant la longueur de l'élément (IEDL) suivi des données de l'élément (IED). Ainsi, le texte (User Data) du message EMS contiendra des appels à ces différents éléments IE définis dans l'en-tête à intégrer aux données du message transmis.

Un nouveau type de message a récemment été développé consistant dans des messages multimédia, désignés par la suite comme MMS (pour Multimedia Messaging Service). Les messages MMS, dont une illustration schématique est donnée sur la figure 2, ont une structure et un protocole de transmission complètement différents des messages SMS ou EMS, et sont normalisés selon la recommandation 3GPP TS 23.140. Les messages MMS présentent une structure définie par l'IETF (RFC 2045) consistant dans un format fichier MIME (Multipurpose Internet Mail Extensions), avec un en-tête et un corps de message pouvant contenir des images, des mélodies, du texte et une présentation des éléments graphiques à l'écran ainsi qu'une synchronisation temporelle entre certains éléments. Un message MMS peut indure des données multimédia beaucoup plus denses que celles transmises par des EMS et permet des présentations multimédia plus riches, du type de celles accessibles sur des ordinateurs par exemple. Les messages MMS sont généralement transmis selon un protocole de transport sur WAP (pour Wireless Application Protocol).

L'échange de messages MMS suppose la présence d'un serveur particulier dédié aux messages MMS dans le réseau de radiocommunication qui est distinct du serveur dédié aux messages SMS et EMS. En outre, l'envoi et/ou la réception de messages MMS par un terminal est soumis à l'installation d'un logiciel d'application particulier qui nécessite l'allocation de grandes capacités de mémoire et de processeur. Or, les terminaux bas coût ou d'une ancienne génération ne peuvent supporter une telle application, alors même qu'ils permettent l'échange de SMS et/ou de EMS.

L'utilisation de messages MMS est donc limitée aux seuls terminaux capables de supporter une telle application, ce qui réduit considérablement l'intérêt d'échanger de tels messages et freine l'essor de ce nouveau type de messages. De plus, certains terminaux comportent l'application MMS mais rejettent l'application EMS tout en conservant la possibilité d'échanger des SMS.

En outre, différentes versions de messages EMS ont déjà été développées, les dernières étant généralement compatibles avec les précédentes. Cependant, l'envoi d'un message EMS depuis un terminal intégrant une nouvelle version (release 5 par exemple) vers un terminal ne possédant que l'ancienne version (release 4 par exemple) peut entraîner un défaut d'affichage du contenu du message.

L'invention a donc pour objectif de répondre au problème de l'interopérabilité entre le système de messagerie MMS et le système de messagerie SMS/EMS, ainsi qu'entre systèmes de messagerie EMS de versions différentes en proposant une adaptation de contenu des messages transmis selon les possibilités de réception du terminal destinataire du message.

Plus spécifiquement, l'invention concerne un procédé d'échange de messages entre un premier terminal mobile appartenant à un premier domaine de messagerie et au moins un second terminal mobile appartenant à un second domaine de messagerie, chaque domaine comprenant au moins un réseau de radiocommunication, un serveur de messagerie d'une première norme de messages courts et/ou avancés, dite EMS/SMS (Enhance Message Service/ Short Message Service) et/ou un serveur de messagerie d'une seconde norme de messages multimédia, dite MMS (Multimedia Message Service), caractérisé en ce que le procédé comporte les étapes suivantes :
- initiation d'un message selon une première norme, EMS ou MMS, depuis un premier terminal à destination d'au moins un second terminal non compatible avec la première norme du message initié ;
- transmission du message par le serveur de messagerie de ladite première norme à une passerelle de messagerie comprenant une base de données constituée d'une table des profiles de messagerie des terminaux appartenant au domaine de messagerie auquel ladite passerelle est associée ;
- conversion par la passerelle de messagerie du message initié selon la première norme, EMS ou MMS, en message selon une seconde norme, EMS ou MMS, supportée par le terminal destinataire ;
- transmission du message converti selon ladite seconde norme par la passerelle de messagerie au serveur de messagerie de ladite seconde norme ;
- délivrance dudit message selon la seconde norme par ledit serveur de la seconde norme au terminal destinataire.

Selon un premier mode de réalisation, la conversion d'un message initié selon une première norme en message selon une seconde norme est effectuée par la passerelle de messagerie du second domaine du terminal destinataire, ladite passerelle procédant à une étape de détermination de la (des) norme(s) de message supportée(s) par le terminal destinataire répertorié de sa table des profiles de messagerie.

Selon un second mode de réalisation, la conversion d'un message initié selon la norme EMS en message selon la norme MMS est effectuée par la passerelle de messagerie du premier domaine du terminal initiateur, ledit message EMS incluant l'adresse de ladite passerelle en en-tête et comprenant un élément d'information indiquant qu'une donnée de type MMS est incluse dans les données du message EMS, ladite conversion du message incluant une étape d'extraction de cette donnée MMS.

Selon une application, la conversion est effectuée entre un message EMS d'une première version en message EMS d'une seconde version.

Selon une caractéristique, la table des profiles contenue dans la passerelle de messagerie d'un domaine de messagerie est mise à jour par envoi d'un message court (SMS), dit message de mise à jour, depuis un terminal répertorié dans ladite table à destination de la passerelle de messagerie, ledit message de mise à jour comprenant un élément d'information contenant le(s) profile(s) de messagerie dudit terminal.

Selon un premier mode de réalisation, la mise à jour de la table des profiles est effectuée automatiquement par le terminal lors d'un changement de ses capacités de traitement des messages.

Selon un second mode de réalisation, la mise à jour de la table des profiles est effectuée sur commande de l'utilisateur du terminal.

Selon un application, les domaines de messagerie des terminaux initiateur et destinataire du message sont confondus.

La présente invention concerne également un système de messagerie associé à au moins un domaine de messagerie comprenant au moins un réseau de radiocommunication, un serveur de messagerie d'une première norme de messages courts et/ou avancés, dite EMS/SMS (Enhance Message Service/ Short Message 5 Service) et/ou un serveur de messagerie d'une seconde norme de messages multimédia, dite MMS (Multimedia Message Service), caractérisé en ce que ledit domaine de messagerie comprend en outre une passerelle de messagerie comportant une base de données constituée d'une table des profiles de messagerie des terminaux appartenant au domaine de messagerie, ladite passerelle de messagerie étant apte à convertir un message émis dans une première norme (EMS, MMS) en message d'une seconde norme (EMS/MMS).

Selon une caractéristique, la passerelle de messagerie relie au moins le serveur de messagerie de la première norme dite EMS/SMS et le serveur de messagerie de la seconde norme dite MMS d'un même domaine.

Selon une autre caractéristique, la passerelle de messagerie d'un premier domaine est reliée à la passerelle de messagerie d'un second domaine.

Selon l'invention, on définit un message court selon la norme dite SMS (Short Message Service) initié par un terminal de radiocommunication, ledit message SMS comprenant des données dites utiles constituées d'un en-tête comprenant des éléments d'information et d'un texte de données, chaque élément d'information comprenant un champ d'identification suivi d'un champ indiquant la longueur des données de l'élément suivi des données de l'élément, caractérisé en ce que l'en-tête comprend un élément d'information dit « de profile » dont l'identifiant est associé à la mise à jour d'un profile de messagerie et dont les données indiquent la(les) norme(s) de messages supporté(es) par le terminal initiateur.

Selon l'invention, on définit également un message avancé selon la norme dite EMS (Enhance Message Service) initié par un terminal de radiocommunication, ledit message EMS comprenant des données dites utiles constituées d'un en-tête comprenant des éléments d'information et d'un texte de données, chaque élément d'information comprenant un champ d'identification suivi d'un champ indiquant la longueur des données de l'élément suivi des données de l'élément caractérisé en ce que l'en-tête comprend un élément d'information dit « MMS » dont l'identifiant indique la présence d'une information de type MMS contenue dans les données du message et dont les données indiquent la longueur de cette information de type MMS, ladite information de type MMS étant constituée d'au moins un en-tête de message MMS.

Les particularités et avantages de la présente invention seront mieux comprises à la lecture de la description qui suit, donnée à titre d'exemple illustratif et non limitatif, faite en référence aux figures annexées dans lesquelles :
- La figure 1, déjà décrite, illustre schématiquement la structure et les paramètres d'un message SMS/EMS ;
- La figure 2, déjà décrite, illustre schématiquement la structure d'un message MMS ;
- la figure 3 illustre schématiquement un système de messagerie associé à un réseau de radiocommunication donné ;
- la figure 4 illustre schématiquement la passerelle de messagerie selon l'invention ;
- la figure 5 est un exemple de table de profiles gérée par la passerelle de messagerie selon l'invention ;
- la figure 6a illustre schématiquement un SMS d'indication de profile ;
- la figure 6b illustre schématiquement le chemin emprunté par un message correspondant à une mise à jour du profile de messagerie ;
- la figure 7 illustre schématiquement l'ensemble des chemins possibles pouvant être empruntés par un message ;
- la figure 8a illustre schématiquement le chemin emprunté par un message correspondant à un envoi direct d'un SMS/EMS vers un MMS ;
- la figure 8b illustre schématiquement un EMS destiné à un terminal ne pouvant recevoir que des messages MMS ;
- la figure 9 illustre schématiquement le chemin emprunté par un message correspondant à un envoi indirect d'un SMS/EMS vers un MMS ;
- la figure 10 illustre schématiquement le chemin emprunté par un message correspondant à un envoi direct d'un MMS vers un SMS/EMS.

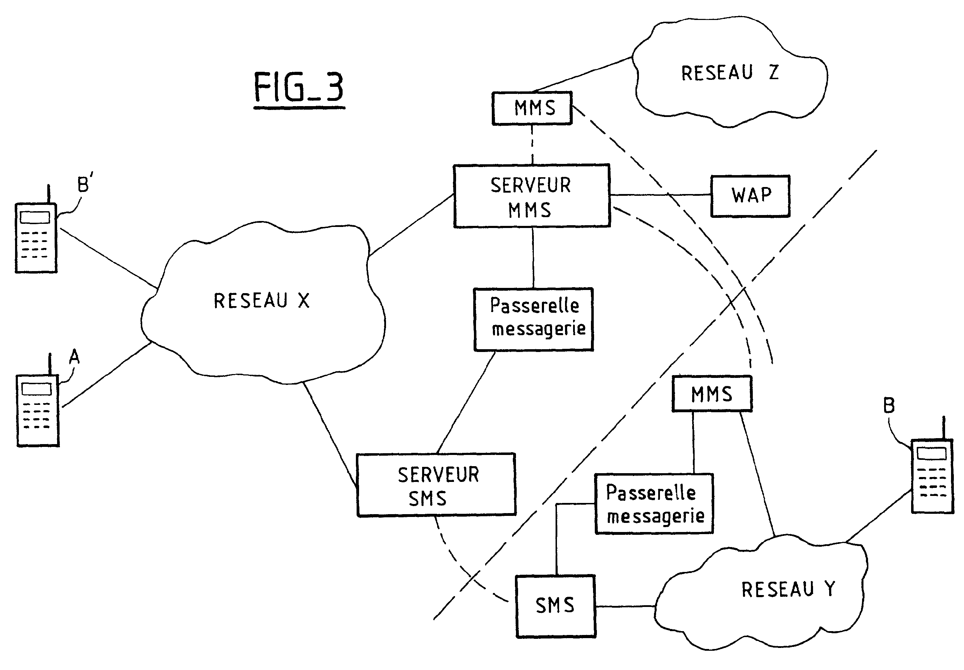

En référence à la figure 3, des terminaux mobiles A et B émettent et reçoivent des messages transmis à travers un réseau de radiocommunication. Les messages échangés peuvent être des messages de type SMS ou EMS, ou des messages de type MMS, ou des messages de type électronique (e-mail), ou autre. Les messages sont transférés par le réseau de radiocommunication depuis le terminal émetteur vers le serveur de messagerie concerné. En général, chaque réseau de radiocommunication possède son propre serveur SMS qui est en contact avec les serveurs SMS des autres réseaux, ainsi que son propre serveur relais MMS qui est généralement relié à une passerelle de connexion du type WAP et qui est en contact avec les serveurs relais MMS des autres réseaux. En revanche, aucune liaison directe n'existe entre le serveur SMS et le serveur MMS d'un même réseau.

Selon une caractéristique essentielle de l'invention, le système de messagerie du réseau comporte, en sus des serveurs spécifiques SMS et MMS ou autre, une passerelle de messagerie reliée aux dits serveurs SMS et MMS, et éventuellement d'autres serveurs.

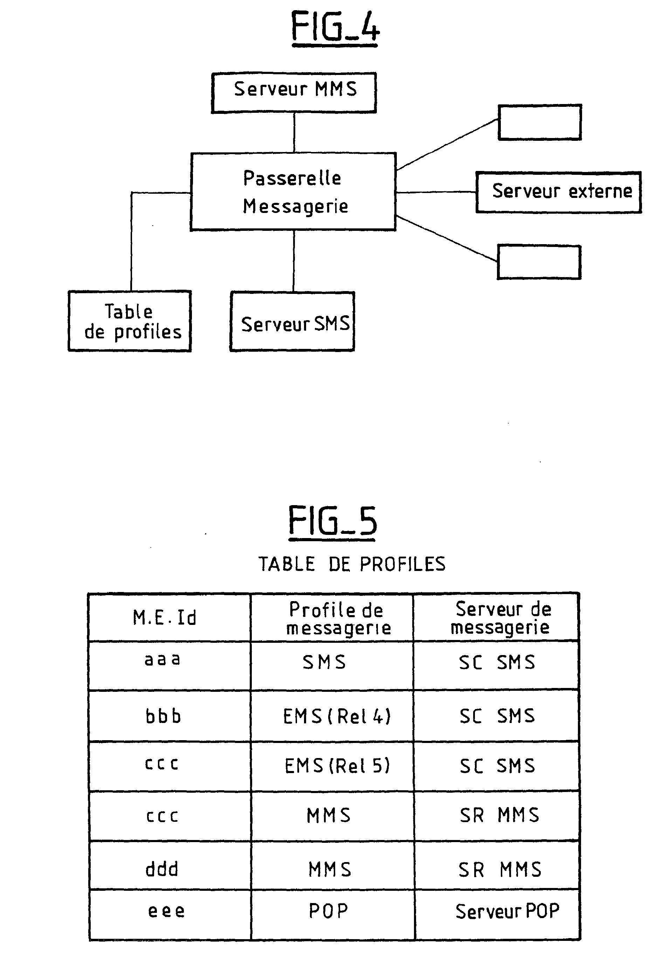

Cette passerelle de messagerie, illustrée schématiquement sur la figure 4, permet de gérer l'interopérabilité entre les systèmes de messagerie distincts que sont les SMS/EMS et les MMS en particulier, mais non exclusivement. Une telle passerelle comporte des liaisons vers plusieurs serveurs de messagerie de normes différentes, tels que par exemple un serveur MMS, un serveur SMS, un serveur POP3 (Post Office Protocol), un serveur IMAP (Internet Message Access Protocol), un serveur Internet, ou autre.

La passerelle de messagerie a pour fonction de convertir les messages échangés dans le domaine dont elle dépend d'une norme à une autre, cette conversion étant effectuée selon les besoins et en fonction du type de message émis et des capacités de réception du terminal destinataire. Par domaine de messagerie on entend désigner l'ensemble des entités nécessaires à la réalisation d'un service de messagerie, c'est à dire au moins un réseau, au moins un serveur de messagerie (SMS et/ou MMS) et au moins une passerelle de messagerie.

En particulier, la passerelle de messagerie selon l'invention contient une base de données constituée d'une table des profiles des terminaux accédant au domaine considéré. Un exemple d'une telle table est donné par la figure 5. Chaque terminal est répertorié et son profile de messagerie est spécifié, et à chaque profile est associé un serveur de messagerie donné.

Ainsi, le terminal aaa ne supporte que des messages courts de type SMS, soit parce qu'il s'agit d'un terminal bas coût ou d'une ancienne génération, soit parce que l'utilisateur du terminal ne souhaite recevoir que ce type de message. Un message quelconque destiné à ce terminal aaa sera nécessairement orienté vers le serveur SMS après avoir été converti au format SMS par la passerelle de messagerie si ce n'était pas le format d'origine.

De même, le terminal ddd ne possède un logiciel d'application que pour l'échange de MMS. Un message quelconque destiné à ce terminal ddd sera nécessairement orienté vers le serveur MMS après avoir été converti à ce format par la passerelle de messagerie si ce n'était pas celui d'origine. En revanche, le terminal ccc peut interpréter des messages MMS ou des messages EMS de norme « release 5 » alors que le terminal bbb ne peut recevoir que des EMS de norme « release 4 » ce qui peut obliger la passerelle de messagerie à convertir un message EMS de norme « release 5 » avant de le transférer au terminal bbb.

D'autres configurations d'échange de différents types de messages peuvent être envisageables selon les applications souhaitées ou selon les développements de nouvelles normes de messagerie.

Le profile de messagerie attribué à chaque terminal d'un domaine de messagerie dans la table de profile de la passerelle de messagerie peut être défini de différentes manières. En particulier, le profile peut être :
(1) prédéfini par le fournisseur du service de messagerie au moment de la souscription audit service, ou
(2) mis à jour par demande explicite de l'utilisateur, ou
(3) fixé de manière automatique par le terminal lui-même lors d'une détection d'un changement dans les capacités de traitement des messages par le terminal mobile.

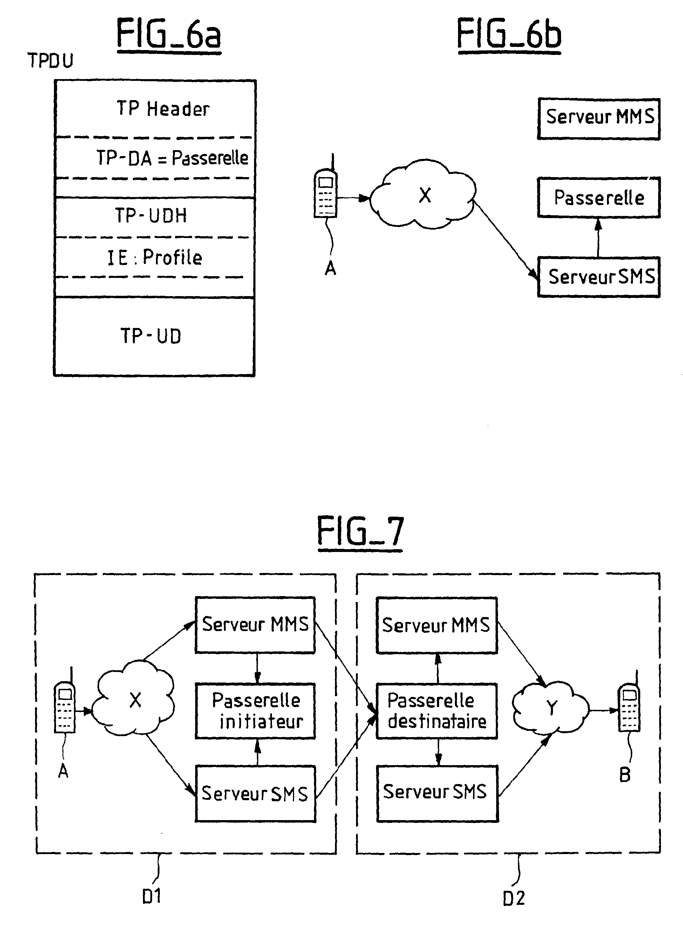

Les deux derniers modes de mise à jour, par exemple, peuvent être réalisés par l'envoi d'un SMS à destination de la passerelle de messagerie. A cet effet, comme illustré sur les figures 6a et 6b, le SMS envoyé comporte l'adresse de la passerelle dans son TP-DA et contient avantageusement un Element d'information spécifique (IE) contenant le profile de messagerie dans son champ de donnée.

Le terminal A envoie le SMS de mise à jour de profile comme un SMS classique qui sera orienté par le serveur SMS vers l'adresse de destination, c'est à dire la passerelle de messagerie. Cette dernière est apte à interpréter un tel SMS et à mettre à jour sa table de donnée de profiles de manière adéquate en extrayant du SMS le paramètre du champ de donnée de l'élément d'information lE « profile ». Le SMS de mise à jour du profile de messagerie peut être envoyé par le terminal A de manière transparente pour l'utilisateur ou de manière volontaire par ledit utilisateur, si son équipement mobile le lui permet. Par exemple, un utilisateur, dont le terminal est techniquement en mesure de recevoir des MMS, peut décider de ne recevoir que des SMS, ou des EMS si son terminal le peut, pendant une période donnée, par exemple pour des raisons de coût de roaming à l'étranger ou pour une quelconque autre raison.

Plusieurs cas de figures d'échanges de messages sont succinctement décrits dans la suite sans préjugé de leur importance ou de leur fréquence d'apparition. La figure 7 illustre schématiquement l'ensemble des chemins possibles pouvant être empruntés par un message quelconque. Un terminal A est initiateur d'un message dans un premier domaine de messagerie D₁ constitué d'un réseau de radiocommunication X et comprenant une passerelle de messagerie et au moins un serveur SMS et un serveur MMS. Un terminal B destinataire de ce message appartient à un autre domaine de messagerie D₂ constitué d'un réseau de radiocommunication Y et comprenant une passerelle de messagerie et au moins un serveur SMS et un serveur MMS. Selon l'invention, l'ensemble des messages entrant dans un domaine de messagerie, quel que soit le type de message, est réceptionné par la passerelle de messagerie qui l'oriente vers le serveur adéquat du domaine destinataire.

Il est entendu que les domaines D₁ et D₂, ainsi que les réseaux X et Y peuvent être confondus. Il est à noter cependant qu'un même domaine de messagerie peut contenir plusieurs réseaux de radiocommunication, selon l'administration du système de messagerie en cause.

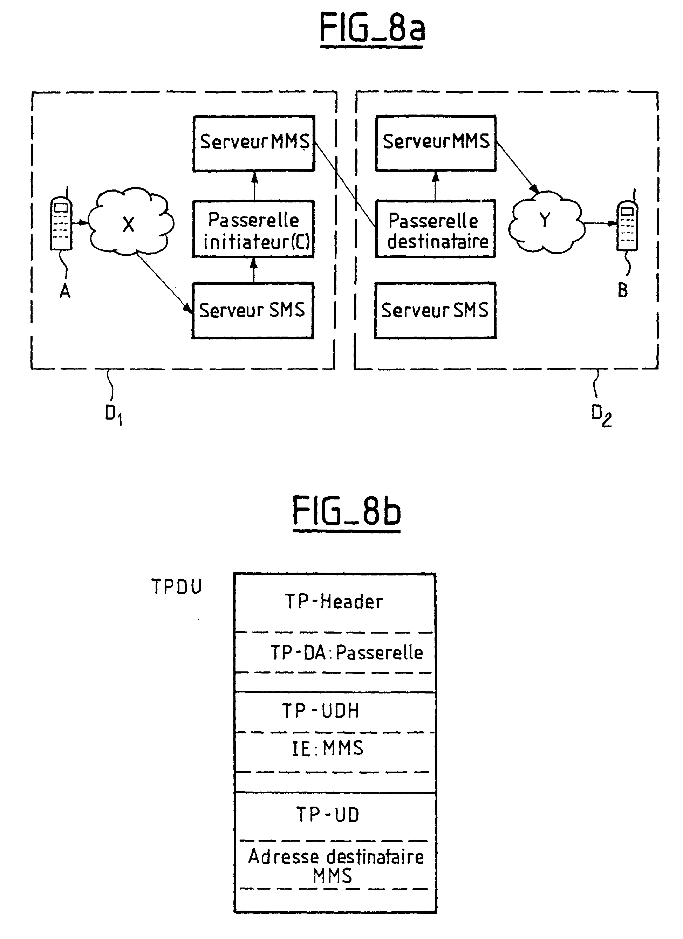

On considère tout d'abord le cas de la figure 8a dans lequel un terminal A est initiateur d'un message EMS à l'attention d'un terminal destinataire B ne supportant que des messages de type MMS, le terminal A étant averti de cette limitation du terminal B.

Le terminal A initiateur du message EMS sait que son destinataire est un terminal ne supportant que la norme MMS, il inclue donc l'adresse MMS de son destinataire à son message EMS, tel que cela est illustré sur la figure 8b.

Le message EMS émis présente alors les particularités suivantes. D'une part, l'adresse destinataire (TP-DA) de l'en-tête (TP Header) de l'EMS est l'adresse de la passerelle de messagerie du domaine de messagerie de l'initiateur du message. D'autre part, le message EMS contient un élément d'information IE dans l'en-tête utilisateur (TP-UDH) indiquant qu'une information de type MMS est contenue dans les données dudit message (TP-DU), cette information étant l'adresse du terminal destinataire. Ainsi, La passerelle de messagerie du domaine du terminal A initiateur du message va recevoir ce message EMS, extraire l'adresse MMS du terminal destinataire B et convertir (C) le message EMS en message fichier de format MIME interprétable par le terminal destinataire B. Par exemple, en convertissant les lE de bitmap du message EMS correspondant à des images en fichiers au format gif ou jpeg associés au message MMS, ou les IE de mélodies du message EMS en fichiers WAV associés au message MMS.

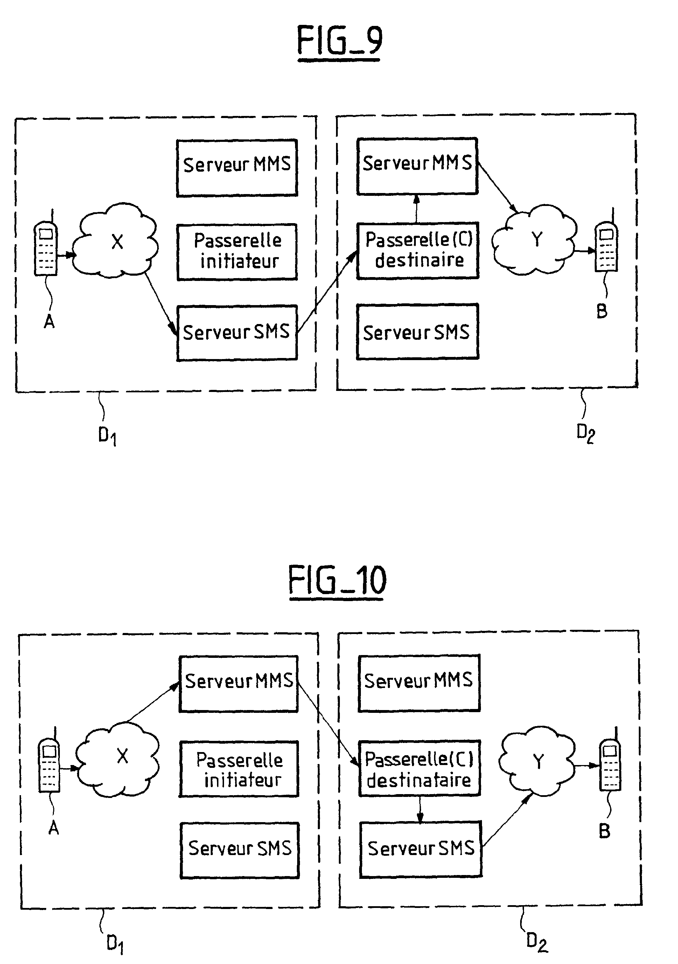

On considère maintenant le cas de la figure 9 dans lequel un terminal A est initiateur d'un message EMS à l'attention d'un terminal destinataire B ne supportant que des messages de type MMS, le terminal A n'étant pas averti de cette limitation du terminal B.

Le terminal A initiateur du message l'envoie sans aucune précaution particulière au serveur SMS de son domaine de messagerie D₁ qui le transmet au domaine destinataire D₂ du terminal B. Or, les messages entrant sont systématiquement réceptionnés par la passerelle de messagerie qui va consulter sa table des profiles. Si le profile du terminal destinataire B avait été EMS alors le message aurait été directement transféré au serveur SMS pour délivrance au terminal destinataire B. En revanche, le profile du terminal destinataire B étant MMS, la passerelle de messagerie destinataire va convertir le message EMS en message MMS avant de le transmettre au serveur MMS du domaine destinataire D₂ pour délivrance au terminal destinataire B.

On considère finalement le cas de la figure 10 dans lequel un terminal A est initiateur d'un message MMS à l'attention d'un terminal destinataire B ne supportant que des messages de type SMS/EMS, le terminal A étant ou non averti de cette limitation du terminal B.

Le message MMS initié par le terminal A est transmis à la passerelle du domaine de messagerie du destinataire comme expliqué dans le cas précédent. La passerelle du domaine destinataire D₂ consulte la table des profiles afin de déterminer quel est le système de messagerie supporté par le terminal destinataire B du message. Dans le cas où la norme associée au terminal B serait la norme SMS/EMS, le message sera converti selon cette norme et transféré au serveur SMS identifié dans la table des profiles du terminal destinataire B pour être délivré selon un procédé classique.

Un autre cas de figure possible, non explicitement illustré, consiste dans l'envoi d'un message EMS par un terminal initiateur utilisant un logiciel d'application plus évolué que celui du terminal destinataire qui ne sera pas en mesure de traiter un tel message, comme par exemple un terminal destinataire muni du logiciel « EMS release 4 » qui ne peut exploiter toutes les données d'un EMS initié par un terminal muni du logiciel « EMS release 5 ». Dans un tel cas, le message EMS est également transmis par le serveur SMS de l'initiateur du message à la passerelle de messagerie du domaine destinataire. La passerelle de messagerie du destinataire vérifie les profiles supportés par le terminal destinataire et convertit le message avant de l'envoyer au serveur SMS du destinataire pour qu'il soit transmis au bon format à son destinataire.

La présente invention inclut également les modes de réalisation préférés suivants:
**1.** Procédé d'échange de messages entre un premier terminal mobile (A) appartenant à un premier domaine de messagerie (D₁) et au moins un second terminal mobile (B) appartenant à un second domaine de messagerie (D₂), chaque domaine (D₁, D₂) comprenant au moins un réseau de radiocommunication, un serveur de messagerie d'une première norme de messages courts et/ou avancés, dite EMS/SMS (Enhance Message Service/ Short Message Service) et/ou un serveur de messagerie d'une seconde norme de messages multimédia, dite MMS (Multimedia Message Service), caractérisé en ce que le procédé comporte les étapes suivantes :
   - initiation d'un message selon une première norme, EMS ou MMS, depuis un premier terminal (A) à destination d'au moins un second terminal (B) non compatible avec la première norme du message initié ; transmission du message par le serveur de messagerie de ladite première norme à une passerelle de messagerie comprenant une base de données constituée d'une table des profiles de messagerie des terminaux appartenant au domaine de messagerie (D₁, D₂) auquel ladite passerelle est associée ;
   - conversion par la passerelle de messagerie du message initié selon la première norme, EMS ou MMS, en message selon une seconde norme, EMS ou MMS, supportée par le(s) terminal(aux) destinataire(s) (B) ;
   - transmission du message converti selon ladite seconde norme par la passerelle de messagerie au serveur de messagerie de ladite seconde norme ;
   - délivrance dudit message selon la seconde norme par ledit serveur de la seconde norme au(x) terminal(aux) destinataire(s).
**2.** Procédé selon la revendication 1, caractérisé en ce que la conversion d'un message initié selon une première norme, en un message selon une seconde norme, est effectuée par la passerelle de messagerie du second domaine (D₂) du terminal destinataire (B), ladite passerelle procédant à une étape de détermination de la (des) norme(s) de message supportée(s) par le terminal destinataire (B) répertorié de sa table des profiles de messagerie.
**3.** Procédé selon la revendication 1, caractérisé en ce que la conversion d'un message initié selon la norme EMS en un message selon la norme MMS est effectuée par la passerelle de messagerie du premier domaine (D₁) du terminal initiateur (A), ledit message EMS incluant l'adresse (TP-DA) de ladite passerelle en en-tête (TP-Header) et comprenant un élément d'information (IE) indiquant qu'une donnée de type MMS est incluse dans les données (TP-DU) du message EMS, ladite conversion du message incluant une étape d'extraction de cette donnée MMS.
**4.** Procédé selon la revendication 1, caractérisé en ce que la conversion est effectuée entre un message EMS d'une première version en message EMS d'une seconde version.
**5.** Procédé selon la revendication 1, caractérisé en ce que la table des profiles contenue dans la passerelle de messagerie d'un domaine de messagerie (D₁, D₂) est mise à jour par envoi d'un message court (SMS), dit message de mise à jour, depuis un terminal répertorié dans ladite table à destination de la passerelle de messagerie, ledit message de mise à jour comprenant un élément d'information (lE) contenant le(s) profile(s) de messagerie dudit terminal.
**6.** Procédé selon la revendication 5, caractérisé en ce que la mise à jour de la table des profiles est effectuée automatiquement par le terminal lors d'un changement de ses capacités de traitement des messages.
**7.** Procédé selon la revendication 5, caractérisé en ce que la mise à jour de la table des profiles est effectuée sur commande de l'utilisateur du terminal.
**8.** Procédé selon l'une quelconque des revendications précédentes, caractérisé en ce que les domaines de messagerie (D₁, D₂) des terminaux initiateur (A) et destinataire (B) du message sont confondus (D₁=D₂).
**9.** Système de messagerie associé à au moins un domaine de messagerie comprenant au moins un réseau de radiocommunication, un serveur de messagerie d'une première norme de messages courts et/ou avancés, dite EMS/SMS (Enhance Message Service/ Short Message Service) et/ou un serveur de messagerie d'une seconde norme de messages multimédia, dite MMS (Multimedia Message Service), caractérisé en ce que ledit domaine de messagerie comprend en outre une passerelle de messagerie comportant une base de données constituée d'une table des profiles de messagerie des terminaux appartenant au domaine de messagerie, ladite passerelle de messagerie étant apte à convertir un message émis dans une première norme (EMS, MMS) en message d'une seconde norme (EMS/MMS).
**10.** Système de messagerie selon la revendication 9, caractérisé en ce que la passerelle de messagerie relie au moins le serveur de messagerie de la première norme dite EMS/SMS et le serveur de messagerie de la seconde norme dite MMS d'un même domaine.
**11.** Système de messagerie selon l'une des revendications 9 à 10, caractérisé en ce que la passerelle de messagerie d'un premier domaine (D₁) est reliée à la passerelle de messagerie d'un second domaine (D₂).
**12.** Message court selon la norme dite SMS (Short Message Service) initié par un terminal de radiocommunication, ledit message SMS comprenant des données dites utiles constituées d'un en-tête (TP-UDH) comprenant des éléments d'informations (IE) et d'un texte de données (TP-UD), chaque élément d'information comprenant un champ d'identification (IEI) suivi d'un champ indiquant la longueur des données de l'élément (IEDL) suivi des données de l'élément (IED), caractérisé en ce que l'en-tête (TP-UDH) comprend un élément d'information dit « de profile » (IE-profile) dont l'identifiant (IEI) est associé à la mise à jour d'un profile de messagerie et dont les données (IED) indiquent la(les) norme(s) de messages supporté(es) par le terminal initiateur.
**13.** Message avancé selon la norme dite EMS (Enhance Message Service) initié par un terminal de radiocommunication, ledit message EMS comprenant des données dites utiles constituées d'un en-tête (TP-UDH) comprenant des éléments d'informations (IE) et d'un texte de données (TP-UD), chaque élément d'information comprenant un champ d'identification (IEI) suivi d'un champ indiquant la longueur des données de l'élément (IEDL) suivi des données de l'élément (IED), caractérisé en ce que l'en-tête (TP-UDH) comprend un élément d'information dit « MMS » (IE-MMS) dont l'identifiant (IEI) indique la présence d'une information de type MMS contenue dans les données du message (TP-UD) et dont les données (IED) indiquent la longueur de cette information de type MMS, ladite information de type MMS étant constituée d'au moins un en-tête de message MMS.

## Revendications

1. Procédé, mis en oeuvre dans un premier terminal mobile (A), de transmission d'un message avancé (EM) de service de messages courts avancés (EMS) (D1) à un second terminal mobile (B), **caractérisé en ce que** le procédé comprend :
- le premier terminal mobile (A) génère un en-tête d'information de message avancé EMS (D1) comprenant une indication que des données contenues dans le message avancé EMS (D1) comprennent des informations de service de messagerie multimédia (MMS) (D2) et des données multimédia ;
- le premier terminal mobile (A) génère une partie texte du message avancé EMS (D1), la partie texte étant associée aux données multimédia ; et
- le premier terminal mobile (A) transmet le message avancé EMS (D1) au second terminal mobile (B) par une passerelle de messagerie (C) configurée pour convertir le message avancé EMS (D1) , conformément à l'en-tête d'information de message avancé EMS (D1) et à la partie texte, en un message MMS (D2) compatible pour une réception par le second terminal mobile (B).

2. Procédé selon la revendication 1, dans lequel l'en-tête d'information de message avancé EMS (D1) comprend au moins un élément d'information contenant les données multimédia.

3. Procédé selon la revendication 1 ou la revendication 2, dans lequel l'élément d'information MMS (D2) comprend une adresse MMS (D2) du second terminal mobile (B).

4. Procédé selon la revendication 3, dans lequel l'adresse MMS (D1) du second terminal mobile (B) correspond à une adresse à travers laquelle le second terminal mobile (B) est configuré pour recevoir le message MMS (D2), le message MMS (D2) ayant un en-tête de message et un corps de message, le corps de message étant configuré pour comprendre au moins un fichier multimédia.

5. Terminal mobile (A) comprenant :
- des moyens de génération d'un message avancé (EM) de service de messages courts avancés (EMS) (D1) comprenant un en-tête d'information et une partie texte, l'en-tête d'information comprenant au moins un élément d'information ayant un champ d'identification, un champ indiquant la longueur des éléments d'information et un élément d'information de service de messagerie multimédia (MMS) (D2) indiquant la présence d'information MMS (D2) dans la partie texte du message ; et
- des moyens de transmission du message avancé EMS (D1) à un second terminal mobile (B) par une passerelle de messagerie (C) configurée pour convertir le message avancé EMS (D1) , conformément à l'en-tête d'information et à la partie texte, en un message MMS (D2) compatible pour une réception par le second terminal mobile (B) .

6. Terminal mobile selon la revendication 5, dans lequel l'en-tête d'information de message avancé EMS (D1) comprend au moins un élément d'information contenant des données multimédia.

7. Terminal mobile selon la revendication 5 ou la revendication 6, dans lequel l'élément d'information MMS (D2) comprend une adresse MMS (D2) du second terminal mobile (B).

8. Terminal mobile selon la revendication 7, dans lequel l'adresse MMS (D2) du second terminal mobile (B) correspond à une adresse à travers laquelle le second terminal mobile (B) est configuré pour recevoir le message MMS (D2), le message MMS (D2) ayant un en-tête dé message et un corps de message, le corps de message étant configuré pour comprendre au moins un fichier multimédia.
